# EUROPÄISCHE PATENTSCHRIFT

(11) **EP 2 853 374 B1**
(45) Veröffentlichungstag und Bekanntmachung des Hinweises auf die Patenterteilung: **17.01.2018**
(21) Anmeldenummer: 14192228.6
(22) Anmeldetag: 14.04.2010
(51) Int. Cl.: B29C 47/64, B29C 47/68, B29B 17/04, B29B 17/00

(54) **Vorrichtung zur Recyclierung von Kunststoffen**
Device for recycling plastics
Dispositif de recyclage de matières plastiques

(30) Priorität: 17.04.2009 AT 5992009
(43) Veröffentlichungstag der Anmeldung: 01.04.2015
(62) Teilanmeldung aus: 10716455.0
(73) Patentinhaber: EREMA Engineering Recycling Maschinen und Anlagen Gesellschaft m.b.H., 4052 Ansfelden (AT)
(72) Erfinder: Feichtinger, Klaus, 4040 Linz (AT); Hackl, Gerhard, 8605 Kapfenberg (AT); Wendelin, Gerhard, 4030 Linz (AT)
(74) Vertreter: Wildhack & Jellinek

(56) Entgegenhaltungen:
- WO-A1-2008/061269
- AT-B- 400 315
- DE-A1- 19 860 352
- US-A- 3 486 192
- POTENTE H ET AL: "ANALYSE DER HOMOGENISIEREFFEKTE IN NUTBUCHSENEXTRUDERN", PLASTVERARBEITER, HUETHIG GMBH, HEIDELBERG, DE, Bd. 39, Nr. 10, 1. Oktober 1988 (1988-10-01), Seiten 160,163-164,16, XP000000444, ISSN: 0032-1338

## Beschreibung

Die Erfindung betrifft eine Anordnung zur Recyclierung von Kunststoffen gemäß Anspruch 1. Aus dem Stand der Technik sind Verfahrensabfolgen in ähnlicher Form bereits seit langem bekannt. So ist bekannt, Kunststoffmaterial, das recycliert werden soll, zuerst in einem Schneidverdichter bei erhöhter Temperatur und, gegebenenfalls unter Beaufschlagung von Vakuum, aufzubereiten, anschließend in einem Extruder aufzuschmelzen und die Schmelze zu filtrieren, zu entgasen und abschließend beispielsweise zu granulieren. Vorrichtungen zur Durchführung solcher Verfahren sind beispielsweise aus der EP 123 771 B, der EP 390 873 B oder der AT 396 900 B bekannt.

Weiters existieren zahlreiche Verfahren und Vorrichtungen um einzelne Schritte, z.B. die Entgasung der Schmelze, zu optimieren. So kann beispielsweise die Ausbildung einer Druckloszone vor den Entgasungsöffnungen vorgesehen, um für eine verlässliche Entgasung des Kunststoffmaterials zu sorgen. Weiters existieren einige Vorrichtungen in denen versucht wird, den Migrationsweg für die im Kunststoff eingeschlossenen Gasblasen möglichst gering zu halten, um den Gasblasen zu ermöglichen, aus der Schmelze auszutreten bevor diese an der letzen Entgasungsöffnung vorbeigefördert wird. Insbesondere handelt es sich dabei um Einrichtungen, die das Kunststoffmaterial in eine schlauchförmige Gestalt überführen.

Auch existieren zahlreiche Ausführungsformen diverser Schmelzefilter zur Entfernung von festen Fremdstoffen und/oder nicht aufgeschmolzenem Restpolymer.

All dies dient in erster Linie zur Erhöhung der Qualität des Endproduktes. Die WO 2008/061269 A1 beschreibt eine Vorrichtung nach dem Oberbegriff von Anspruch 1. Der vorliegenden Erfindung liegt die Aufgabe zugrunde, eine verbesserte Vorrichtung zur Recyclierung von Kunststoffen zu schaffen, die ein Endprodukt von hoher qualitativer Güte liefert, wobei die Vorrichtung gleichzeitig mit hoher Produktivität betrieben werden kann. Ein Verfahren zur Recyclierung von Kunststoffen, das nicht unter die beanspruchte Erfindung fällt, umfasst die folgenden Bearbeitungsschritte:
a) Aufbereitung des Rohmaterials, wobei das Material, falls erforderlich zerkleinert und, in eine fluidartige Form gebracht wird und unter Erhaltung seiner Stückigkeit und Rieselfähigkeit, erwärmt und permanent gemischt, und gegebenenfalls entgast, erweicht, getrocknet, in seiner Viskosität erhöht und/oder kristallisiert wird,
b) Aufschmelzen des aufbereiteten Materials, zumindest soweit, dass eine Filtration möglich ist,
c) Filtration der Schmelze zur Befreiung von Verunreinigungen,
d) Homogenisierung der filtrierten Schmelze,
e) Entgasung der homogenisierten Schmelze, sowie
f) Austragung und/oder Nachfolgebearbeitung der Schmelze, z.B. durch Granulierung, Blasfolienbearbeitung,
wobei diese Bearbeitungsschritte in der angegebenen Reihenfolge prozessual aufeinanderfolgen.

Es hat sich gezeigt, dass die Verfahrenführung in genau dieser Reihenfolge der Bearbeitungsschritte eine hohe Produktqualität bei gleichzeitig effizienter Verfahrensführung liefert. Insbesondere wurde als vorteilhaft erkannt, dass der Schritt der Homogenisierung erst nach der Filtration, jedoch vor der Entgasung der Schmelze Vorteile bringt, da auf diese Weise die Homogenisierung nicht durch allfällige grobe Verunreinigungen oder feste Fremdstoffe bzw. nicht aufgeschmolzene Kunststoffnester beeinträchtigt wird und gleichzeitig die anschließende Entgasung wirksam und effizient vollzogen werden kann, wobei die Gasblasen nahezu vollständig aus der Schmelze entfernt werden können. Auf diese Weise lässt sich ein Endmaterial von hoher Qualität erreichen, das für verschiedene Nachfolgebearbeitungen einsetzbar ist.

In der Praxis können störende Agglomerate beispielsweise durch Verschmutzungen, durch Füllstoffe oder, bei Mischpolymeren, durch andere Polymere gebildet werden. Generell beeinträchtigen diese Agglomerate die Endqualität des Kunststoffes auf verschiedene Weise, insbesondere die mechanischen und optischen Eigenschaften des Endproduktes. So führen beispielsweise Verschmutzungen, wie Papierfasern, Druckfarbenagglomerate, Kleberreste von Etiketten etc., die sich noch nach der Filtration in der Matrix befinden, zu Einbußen bei der Zugfestigkeit des Polymers oder zu optischen Defekten. Störsubstanzen, die trotz Filtration in der Schmelze verbleiben, sollten somit vorteilhafterweise möglichst fein und gleichmäßig verteilt werden. Dies gilt für Verschmutzungen, Polymere und Füllstoffe in gleicher Weise. Je feiner und gleichmäßiger diese Störstoffe in der Matrix verteilt sind, desto weniger negativ sind ihre Auswirkungen im Endprodukt. Diese Verteilung erfolgt erfindungsgemäß durch die nach der Filtration nachfolgende Homogenisierung.

Zusätzlich wird durch die Homogenisierung auch eine weitere Zerkleinerung der Teilchen erreicht. Diese Verkleinerung der Störteilchen führt ebenfalls zu einer Qualitätssteigerung des Endproduktes, beispielsweise zu besseren mechanischen Werten bei Spritzgussteilen, zu geringeren optischen Beeinträchtigungen bei Folien, oder konkret zur Erreichung einer besseren Schlagzähigkeit bei der feinen Verteilung von Polyolefinen in einer PET-Matrix.

Allfälliges Restgas würde bei der abschließenden Bearbeitung ebenfalls zu Defiziten, wie beispielsweise Blasenbildungen, Folienrissen etc., führen. Beim erfindungsgemäßen Verfahren fängt somit der Schmelzefilter leicht gasende Stoffe aus der Schmelze auf, der Rest wird in der Homogenisierungsstrecke verteilt und zerkleinert und durch die anfallende Scherbeanspruchung werden temperatursensible Verschmutzungen zum Zersetzen gebracht. In der nachfolgenden Schmelzeentgasung wird dieses Gas beseitigt.

Auf der einen Seite werden temperatursensible Materialien durch die Homogenisierstrecke thermisch beansprucht und zum Abgasen gezwungen. Auf der anderen Seite werden die verbleibenden Teilchen so fein in der Polymermatrix verteilt, dass sie durch weitere thermische Beanspruchungen durch das umgebende Polymer besser geschützt werden und weniger zur Gasproduktion neigen. In den nachfolgenden Verarbeitungsschritten, z.B. in einem Blasfolienturm, wird nun ein gasfreier bzw. bläschenfreier und agglomeratfreier Film erzeugt.

Es werden somit durch die Filtration größervolumige Störsubstanzen und Verschmutzungen weitgehend entfernt. Kleinvolumige Störsubstanzen, die den Filter passieren und in der Schmelze verbleiben, werden durch die Homogenisierung fein und gleichmäßig verteilt. Dadurch stören sie weniger im Endprodukt und/oder werden in der anschließenden Entgasung nahezu vollständig entfernt.

Wird die Schmelze, wie dies im Stand der Technik teilweise praktiziert wird, bereits vor der Filtration homogenisiert, werden dadurch auch die Verunreinigungen zerkleinert und können die Filterfläche passieren bzw. werden nicht herausgefiltert. Dies ist jedoch nachteilig und soll verhindert werden.

Nach der Filtration sollen die noch enthaltenen Störstoffe durch die Homogenisierung jedoch möglichst zerkleinert und verteilt werden: Durch ihr verbessertes Oberflächen/Volumen-Verhältnis geben die feinen Partikel dann mehr Gas ab und können effizienter und vollständiger über die Entgasung entfernt werden. Dies wird zusätzlich durch eine gleichmäßige Verteilung in der Matrix unterstützt, da dadurch die Oberfläche noch weiter vergrößert wird. Außerdem verbessert sich durch die gleichmäßige Verteilung die Homogenität des Materials und damit dessen mechanische und optische Eigenschaften.

Wesentlich ist somit die Vorsehung jedes einzelnen der obigen Bearbeitungsschritte sowie die Einhaltung der exakten Reihenfolge bzw. Abfolge der Verfahrenskette.

Weitere vorteilhafte Ausgestaltungen des Verfahrens werden nachfolgend beschrieben:
Gemäß einer bevorzugten Verfahrensführung ist es vorteilhaft, dass die obigen Bearbeitungsschritte zeitlich und räumlich unmittelbar und direkt ohne Zwischenschritte aufeinanderfolgen. Zwar ist durchaus möglich, dass zwischen den obigen Bearbeitungsschritten auch Zwischenschritte eingefügt werden, beispielsweise dass das Material oder die Schmelze zeitweise zwischengelagert oder über nicht komprimierende Schnecken od. dgl. transportiert werden oder dass noch weitere Bearbeitungsschritte eingeschoben sind. Dennoch hat sich gezeigt, dass eine unmittelbare und direkte Abfolge der obigen Bearbeitungsschritte insbesondere hinsichtlich der Produktivität und der Effizienz des Verfahrens vorteilhaft ist. Auch steigert sich in der Regel die Qualität des Endproduktes, wenn auf Zwischenschritte verzichtet wird und das Material zügig in einer durchgehenden kontinuierlichen Verarbeitungskette verarbeitet wird. Diese Art der Verfahrensführung ist somit aus qualitativer und ökonomischer Hinsicht zu bevorzugen.

Eine weitere vorteilhafte Verfahrensführung ist dadurch gekennzeichnet, dass die Schmelze bei der Homogenisierung geschert und gemischt wird bzw. einer intensiven Scherspannung und Dehnspannung unterworfen und stark beschleunigt wird. Der Vorgang der Homogenisierung ist ein relativ komplexer Vorgang. Hierbei ist es vorteilhaft, wenn das Material sowohl einer Scherung als auch einer Mischung unterzogen wird, wobei gleichzeitig eine Temperaturerhöhung der Schmelze sowie eine Durchmischung der gescherten Teile mit den weniger gescherten Teilen erfolgt. Auf diese Weise lässt sich eine gleichmäßige Schmelze mit fein verteilten und sehr kleinen Störsubstanzen erzielen, die im Anschluss daran optimal und wirksam entgast werden kann.

Gemäß einer weiteren vorteilhaften Verfahrensführung ist vorgesehen, dass die Temperatur des Materials bzw. der Schmelze während, zumindest aber am Ende, der Homogenisierung und vor Beginn der Entgasung zumindest gleich hoch wie, vorzugsweise höher als, die Temperaturen bei allen anderen Behandlungsschritten ist. Die Homogenisierung wird dadurch unterstützt, dass die Temperatur während der Homogenisierung höher ist als im restlichen Verfahren. Auf diese Weise kann die Schmelze bestmöglich auf die bevorstehende Entgasung vorbereitet werden. Versuche haben gezeigt, dass die Qualität des Endproduktes überraschenderweise höher ist, wenn die Homogenisierung bei derart erhöhten Temperaturen durchgeführt wird.

In diesem Zusammenhang ist es besonders vorteilhaft, wenn vorgesehen ist, dass die Temperatur des Materials bzw. der Schmelze bei der Austragung bzw. die Temperatur bei der Nachfolgebearbeitung geringer ist als, oder maximal gleich ist wie, die Temperatur während bzw. am Ende der Homogenisierung. Es hat sich überraschenderweise gezeigt, dass die Qualität des Endproduktes steigt, wenn die Temperatur der Schmelze nach der Homogenisierung wieder verringert wird bzw. wenn die Entgasung und insbesondere die Austragung und eine allfällige Nachfolgebearbeitung bei vergleichsweise geringeren Temperaturen durchgeführt werden.

Zur vorteilhaften Verbesserung der Entgasungsleistung kann vorgesehen sein, dass während der Homogenisierung oder unmittelbar vor oder nach der Homogenisierung, jedoch nach der Filtration und vor der Entgasung, zur Verbesserung der Entgasungsleistung zellbildende Medien, z.B. Kohlendioxid, Stickstoff oder Wasser, in die Schmelze eingebracht werden.

Für die Qualität des Endproduktes und die Effizienz des Verfahrens ebenfalls vorteilhaft ist es, wenn vorgesehen ist, dass die Schmelze nach der Entgasung und bei oder vor der Austragung bzw. Nachfolgebearbeitung, insbesondere um bis zu 20%, vorzugsweise um 5 bis 10%, abgekühlt wird.

Eine erfindungsgemäße Anordnung zur Recyclierung von Kunststoffen wird in Anspruch 1 definiert. Durch die prozessuale Aneinanderschaltung dieser Einheiten ist ein definierter Weg des Materials bzw. der Schmelze durch die erfindungsgemäße Vorrichtung bzw. die Verarbeitungskette vorgezeichnet. Auf diese Weise und mit dieser Anordnung lässt sich die Produktivität steigern und die Materialqualität, wie zuvor beschrieben, erhöhen.

Zwar ist es bei vorteilhaften Ausgestaltungen der Anordnung möglich, dass weitere Einheiten zwischengeschaltet werden, doch ist es gemäß einer vorteilhaften Weiterentwicklung der Anordnung auch möglich, dass die Einheiten räumlich unmittelbar und direkt, ohne weitere dazwischengeschaltete Einheiten, nacheinander geschaltet und prozessual hintereinander gekoppelt sind. Auf diese Weise sind die Wege des Materials bzw. der Schmelze kurz und die Vorrichtung kann auf die notwendigsten Einheiten reduziert werden. Dies senkt die unmittelbaren Kosten und beschleunigt auch die Prozessführung und die Durchlaufzeiten bei zumindest gleichwertiger, oft auch erhöhter, Produktqualität.

Weiters ist es vorteilhaft, wenn eine Steuerung zur jeweils unabhängigen Regulierung der jeweiligen Temperaturen des Materials bzw. der Schmelze in den einzelnen Einheiten vorgesehen ist. Eine unabhängige Regulierung der Temperaturen in jeder einzelnen Einheit und bei jedem einzelnen Bearbeitungsschritt ist vorteilhaft für die Einstellung der Produktqualität.

So hat es sich in Versuchen überraschenderweise gezeigt, dass es vorteilhaft ist, wenn die Steuerung die Temperaturen so regelt, dass die Temperatur des Materials bzw. der Schmelze während, zumindest aber am Ende, der Homogenisierung in der Homogenisierungseinheit und vor Beginn der Entgasung in der Entgasungseinheit zumindest gleich hoch wie, vorzugsweise höher als, bei allen anderen Behandlungsschritten in den anderen Einheiten ist, insbesondere dass die Temperatur des Materials bzw. der Schmelze bei der Austragung in der Austragungseinheit bzw. die Temperatur während der Nachfolgebearbeitung in der Nachfolgebearbeitungseinheit geringer ist als, oder maximal gleich ist wie, die Temperatur während bzw. am Ende der Homogenisierung in der Homogenisierungseinheit. Die Qualität eines solchen Endproduktes war in mehrfacher Hinsicht verbessert.

Eine vorteilhafte Ausgestaltung der erfindungsgemäßen Anordnung sieht vor, dass die Homogenisierungseinheit, nämlich eine Schnecke, derart ausgebildet ist, dass die Schmelze darin geschert und gemischt wird bzw. einer intensiven Scherspannung und Dehnspannung unterworfen und stark beschleunigt wird. Auf diese Weise ist es möglich, die Scherbereiche und die Mischbereiche so anzuordnen, dass die Strömungsverhältnisse in der Schnecke eine gute Homogenisierung erreichen lassen.

Eine vorteilhafte Anordnung ist, dadurch gekennzeichnet, dass die einzelnen Bearbeitungseinheiten (2) bis (5), vorzugsweise (2) bis (6), insbesondere (2) bis (7), axial hintereinander angeordnet sind bzw. auf einer gemeinsamen Längsachse liegen. Auf diese Weise kann eine räumlich platzsparende Anordnung erhalten werden, bei der das Material bzw. die Schmelze einen klaren vorgegebenen Weg nimmt.

Um die Entgasungsleistung zu verbessern, kann vorgesehen sein, dass eine Einheit zur Zugabe von zellbildenden Medien, z.B. Kohlendioxid, Stickstoff oder Wasser, in die Schmelze, vorgesehen ist, wobei die Einheit die zellbildenden Medien während der Homogenisierung oder unmittelbar vor oder nach der Homogenisierung, jedoch nach der Filtration und vor der Entgasung, einbringt.

Ebenfalls vorteilhaft ist es, wenn vorgesehen ist, dass, insbesondere in der Austragseinheit, eine Kühleinrichtung für die aus der Entgasungseinheit austretende Schmelze, beispielsweise ein Zylinder oder eine Schnecke, vorgesehen ist, die geeignet ist, die Schmelze nach der Entgasung und bei oder vor der Austragung bzw. Nachfolgebearbeitung, insbesondere um bis zu 20%, vorzugsweise um 5 bis 10%, abzukühlen.

Das nicht unter die beanspruchte Erfindung fallende Verfahren sowie die erfindungsgemäße Vorrichtung werden im Folgenden exemplarisch unter Bezugnahme auf die beiliegenden Figuren besch rieben.
Fig. 1 zeigt ein skizziertes Schema einer erfindungsgemäßen Anordnung.
Fig. 2 zeigt eine konkrete Ausgestaltung einer erfindungsgemäßen Anordnung.
Fig. 3a und 3b zeigen die Ergebnisse von Vergleichsversuchen mit bedruckten Folien.
Fig. 4 und 5 zeigen die Ergebnisse von Vergleichsversuchen mit mit Klebeetiketten versehenen Folien.

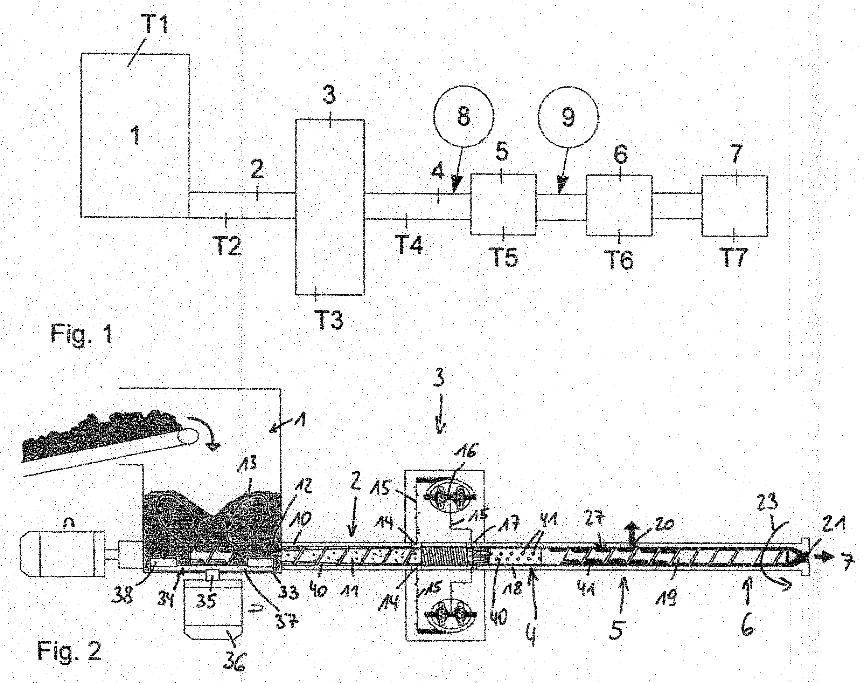

In Fig. 1 ist eine Vorrichtung bzw. eine Anordnung zur Recyclierung von Kunststoffen schematisch dargestellt. Die Anordnung umfasst von links nach rechts eine Aufbereitungseinheit 1, wobei es sich in der Regel um einen an sich bekannten Schneidverdichter bzw. Aufbereitungsbehälter handelt, in dessen Inneren umlaufende Misch- und Zerkleinerungswerkzeuge das darin vorgelegte Kunststoffmaterial bearbeiten und gegebenenfalls zerkleinern. Das Material ist dabei in einer permanent fluidartigen bzw. freifließenden Form und wird durch die Misch- und Zerkleinerungswerke trotz erhöhter Temperatur immer stückig und rieselfähig erhalten. In der Aufbereitungseinheit 1 wird das Material noch nicht aufgeschmolzen, sondern bestenfalls auf eine Temperatur knapp unterhalb des Schmelzpunktes erwärmt, insbesondere auf eine Temperatur im Bereich des jeweiligen VICAT-Erweichungspunktes des Materials. In Abhängigkeit des zu behandelnden Polymers wird das Polymer bereits in dieser frühen Verfahrenstufe entgast erweicht, getrocknet, kristallisiert und/oder in seiner Viskosität erhöht. Gegebenenfalls kann an den Aufbereitungsbehälter 1 auch ein Vakuum angelegt werden. Diverse Ausgestaltungen derartiger Aufbereitungseinheiten 1 sind aus dem Stand der Technik hinlänglich bekannt. Nur exemplarisch wird dabei auf die Druckschriften EP 123 771, EP 390 873, AT 396 900, AT 407 235, AT 407 970, etc. verwiesen.

Im unteren Bereich der Aufbereitungseinheit 1 ist eine Aufschmelzeinheit 2, nämlich ein verdichtender Extruder, angeschlossen. Die Aufschmelzeinheit 2 dient zum Aufschmelzen des aufbereiteten Materials und zwar zumindest soweit, dass eine Filtration des Materials möglich ist. In der Anordnung gemäß Fig. 1 ist die Aufschmelzeinheit 2 unmittelbar und direkt an die Aufbereitungseinheit 1 angeschlossen, wobei aus dem Stand der Technik diverse Anschlussmöglichkeiten, z.B. radial oder tangential, bekannt sind. Dies hat den Vorteil, dass die Misch- und Rührwerkzeuge der Aufbereitungseinheit 1 das erweichte Kunststoffmaterial gewissermaßen in den Einzugsbereich der Aufschmelzeinheit 2 stopfen bzw. bringen.

Alternativ kann das Material auch über eine Zwischeneinheit an die Aufschmelzeinheit 2 überführt werden, beispielsweise über eine nicht komprimierende Übergangsvorrichtung, beispielsweise eine Stopfschnecke, insbesondere eine Schnecke mit gleichbleibender Gangtiefe, die die Aufbereitungseinheit 1 mit der Aufschmelzeinheit 2 gewissermaßen indirekt bzw. mittelbar verbindet, aber dennoch einen kontinuierlichen Materialstrom in die Aufschmelzeinheit 2 gewährleistet.

An die Aufschmelzeinheit 2 anschließend ist eine Filtrationseinheit 3 zur Filtration der Schmelze angeordnet. Derartige Schmelzefilter sind ebenfalls aus dem Stand der Technik in verschiedenen Ausführungsformen bekannt. Auf diese Weise werden z.B. feste Fremdstoffe, Fremdpolymere und/oder nicht aufgeschmolzene Polymernester entfernt.

Im Anschluss daran gelangt die Schmelze in eine Homogenisierungseinheit 4. Dabei handelt es sich um einen Drehkörper, z.B. eine Schnecke, dessen Design eine gewisse Abfolge von Scherbereichen und Mischbereichen aufweist. Die innige Vermischung zur Homogenisierung des Polymers wird durch komplexe Strömungsverhältnisse im Inneren des Drehkörpers bzw. der Schnecke bzw. den entsprechenden Schneckenabschnitten bewerkstelligt. Neben Axialströmungen in Förderrichtung treten auch Radialströmungen und Axialströmungen gegen die Förderrichtung, sogenannte Leckströmungen auf. In den Scherbereichen erfolgt eine Temperaturerhöhung der Schmelze, wobei in den Mischbereichen eine Durchmischung der gescherten Teile mit den weniger gescherten Teilen und dadurch ein gewisser Temperaturausgleich erfolgt. Auf diese Weise werden die Störteilchen zerkleinert, verteilt und wird die Schmelze effektiv homogenisiert und für die Entgasung vorbereitet.

Direkt daran anschließend ist eine Entgasungseinheit 5 vorgesehen, um allfällige Gasblasen und Gaseinschlüsse aus der homogenisierten Schmelze zu entfernen. Aus dem Stand der Technik sind ebenfalls diverse Vorrichtungen bekannt, um Gas effektiv aus der Schmelze auszubringen. So kann beispielsweise die Schnecke sehr lang ausgebildet sein, es kann eine Druckloszone vorgesehen sein, oder das Kunststoffmaterial kann über einen dünnen Film oder Schlauch entgast werden.

Ganz rechts im Schema von Fig. 1 sind eine Austragseinheit 6 sowie eine Nachfolgebearbeitungseinheit 7 vorgesehen. Die Austragseinheit 6 dient zur Überführung der entgasten Schmelze in die Nachfolgebearbeitungseinheit 7. Bei letzterer handelt es sich beispielsweise um eine Granulierungseinheit, eine Blasfolienanlage oder eine Spritzgussanlage, die die Schmelze wieder in eine feste Form, beispielsweise in ein Granulat oder eine Folie bringen.

In dem in Fig. 1 gezeigten Ausführungsbeispiel sind die Einheiten 1 bis 7 hintereinander geschaltet und das Kunststoffmaterial bzw. die Schmelze durchläuft die Einheiten 1 bis 7 in der vorgegebenen Reihenfolge kontinuierlich von links nach rechts. Zudem sind bei der Anordnung gemäß Fig. 1 die einzelnen Einheiten räumlich unmittelbar und direkt aneinandergekoppelt und das Material gelangt von jeder Einheit direkt und unmittelbar und ohne Zwischenschritte zur nächsten Einheit. Weitere Einheiten, insbesondere etwaige Zwischenlager, Überführungsschnecken od. dgl., sind zwar möglich, in Fig. 1 allerdings nicht vorgesehen. Dadurch wird die Vorrichtung gemäß Fig. 1 auch relativ kurz und kompakt.

Die Einheiten 2 bis 7, das heißt, die Aufschmelzeinheit 2 bis zur Nachfolgebearbeitungseinheit 7, liegen auf einer gemeinsamen Längsachse bzw. sind axial hintereinander angeordnet. Dadurch wird die gesamte Vorrichtung sehr schmal und platzsparend.

Weiters ist eine Steuerung vorgesehen, die die Temperaturen in jeder einzelnen der Einheit unabhängig voneinander steuern kann. Auf diese Weise kann jeder beliebige Temperaturverlauf in der Verarbeitungskette eingestellt werden.

Vorteilhafterweise ist die Temperatur so gesteuert, dass die Temperatur T4 in der Homogenisierungseinheit 4 bzw. die Temperatur T4 des Materials bzw. der Schmelze während der Homogenisierung, zumindest aber am Ende der Homogenisierung, jedoch auf jeden Fall vor Beginn der Entgasung in der Entgasungseinheit 5, gleich hoch oder höher ist, als in jedem einzelnen der anderen Behandlungsschritte bzw. in jeder anderen Einheit der Anordnung. So sind beispielsweise die Temperatur T2 in der Aufschmelzeinheit 2, die Temperatur T3 der Filtrationseinheit 3, die Temperatur T5 in der Entgasungseinheit 5, die Temperatur T6 in der Austragseinheit 6 sowie die Temperatur T7 in der Nachfolgebearbeitungseinheit 7, jeweils geringer bzw. maximal gleich hoch, wie die Temperatur T4 in der Homogenisierungseinheit 4.

Zudem ist eine Einheit 8 zur Zugabe von zellbildenden Medien vorgesehen, über die beispielsweise Kohlendioxid, Stickstoff oder Wasser in die Schmelze eingebracht werden kann. Auf diese Weise wird die Entgasungsleistung verbessert. Die Zugabe dieser zellbildenden Medien erfolgt insbesondere in die Homogenisierungseinheit 4 bzw. knapp vor oder nach der Homogenisierung, in jedem Fall jedoch nach der Filtration oder auch vor der Entgasung.

In der Austragseinheit 6 ist weiters eine Schmelzekühleinrichtung 9 angeordnet, um die aus der Entgasungseinheit 5 austretende Schmelze abzukühlen. Dabei handelt es sich beispielsweise um einen Zylinder oder eine Schnecke. Die Temperatur der Schmelze reduziert sich dabei um bis zu 20%, vorzugsweise um 5 bis 10%.

In Fig. 2 ist, in Erweiterung und unter Zugrundelegung der Ausführungen zu Fig. 1, eine konkrete Ausführungsform einer erfindungsgemässen Vorrichtung im Detail dargestellt.

Diese Vorrichtung umfasst als Aufbereitungseinheit 1 einen topfförmigen Behälter bzw. Schneidverdichter 1, in den das zu behandelnde Kunststoffgut oben eingefüllt wird. Im Bereich des Bodens 33 des Behälters 1 ist ein Werkzeug 34 in bekannter Weise um eine vertikale, mittig im Behälter 1 angeordnete Achse drehbar gelagert und zur Rotation über eine den Boden 33 durchsetzende Welle 35 von einem Motor 36 angetrieben. Das Werkzeug 34 hat zumindest zwei radiale Arme 37, die mit zweckmäßig als Schneidkanten ausgebildeten Arbeitskanten 38 für das Kunststoffmaterial versehen sind. Diese Arbeitskanten 38 vermischen das zugeführte Kunststoffmaterial und führen gegebenenfalls auch eine Zerkleinerung desselben durch.

Das so bearbeitete Kunststoffmaterial gelangt in eine Aufschmelzeinheit 2 und zwar in ein Gehäuse 10 eines ersten Schneckenabschnittes 11. Dieser Schneckenabschnitt 11 ragt in eine vom Gehäuse 10 gebildete Öffnung 12 hinein. Bei der Drehung der Werkzeuge 34 um die Achse der Welle 35 steigt das im Behälter 1 umlaufende Kunststoffmaterial in Form einer Mischthrombe entlang den Behälterwänden hoch, was durch die Pfeile 13 angedeutet ist. Die auf das umlaufende Kunststoffmaterial ausgeübte Fliehkraft unterstützt den Einzug des Kunststoffmateriales durch die Öffnung 12 in das tangential an den Behälter 1 angeschlossene Gehäuse 10 der Schnecke 11. Alternativ kann das Schneckengehäuse 10 auch etwa annähernd radial an den Behälter 1 angeschlossen sein. Der Kerndurchmesser des ersten Schneckenabschnittes 11 vergrößert sich in Richtung von der Öffnung 12 weg, wodurch das vom Schneckenabschnitt 11 eingezogene Kunststoffmaterial komprimiert und plastifiziert wird.

Das plastifizierte Material tritt aus dem Gehäuse 10 des ersten Schneckenabschnittes 11 durch Öffnungen 14 in eine Filtrationseinheit 3 ein und strömt über Verbindungskanäle 15 zu zumindest einem Filter 16, der die in der Kunststoffschmelze enthaltenen groben Verunreinigungen herausfiltert.

Nach Passieren der Filtrationseinheit 3 gelangt das plastifizierte Kunststoffmaterial über Verbindungskanäle 15 und über Einströmöffnungen 17 in eine Homogenisierungseinheit 4, die sich im Inneren eines weiteren Gehäuses 18 befindet. In der Homogenisierungseinheit 4 ist ein koaxial mit der Schnecke 11 ausgerichteter Homogenisator 40 in Form eines zylindrischen Drehkörpers angeordnet, wobei sich der Homogenisator 40 im Gehäuse 18 dreht und dadurch auf den ihn umströmenden Polymerfilm bzw. -schlauch eine scherende und mischende Wirkung ausübt. Um die Mischwirkung und auch die Schereffekte zu erhöhen, ist auf der Außenfläche des Homogenisators 40 eine größere Anzahl von Erhebungen 41 angeordnet. Bereits in diesem Abschnitt können sich allfällig bildende Gase entweichen.

Im Gehäuse 18 ist weiters ein zweiter Schneckenabschnitt 19 drehbar gelagert, der koaxial an den Homogenisator 40 anschließt. Dieser zweite Schneckenanschnitt 19 fördert das plastifizierte Kunststoffmaterial in einen Entgasungsbereich bzw. eine Entgasungseinheit 5, vorbei an Entgasungsöffnungen 20, durch welche die aus dem Kunststoffmaterial ausgetretenen Gase abgeführt, gesammelt und gegebenenfalls einer weiteren Verwendung zugeführt werden können.

Nach Passieren dieser Entgasungsöffnungen 20 gelangt das Kunststoffmaterial über eine Austragseinheit 6 in Form einer Austragsschnecke mit geringer Scherleistung, zu einem Auslaß 21, an den Werkzeuge bzw. Nachfolgebearbeitungseinheiten 7, z.B. Granuliereinrichtungen, angeschlossen sein können.

Zweckmäßig sind die beiden Schneckenabschnitte 11, 19 in Bohrungen 40 bzw. 41 der beiden Gehäuse 10 bzw. 18 gelagert, welche Bohrungen relativ zueinander koaxial angeordnet sind und jeweils gleichen Durchmesser aufweisen. Die koaxiale Anordnung der beiden Schneckenabschnitte 11, 19 und des Homogenisators 40 ermöglicht es in einfacher Weise, diese beiden Schneckenabschnitte 11, 19 zu einem einzigen Baukörper mit gemeinsamen Kern zu vereinigen und die beiden Schneckenabschnitte 11, 19 von einer Seite her gemeinsam anzutreiben, also von der in Fig. 2 linken Seite her. Die Umlaufrichtung der beiden Schneckenabschnitte 11, 19 ist durch einen Pfeil 23 angedeutet.

Um die Entgasung des bearbeiteten Kunststoffmateriales im Gehäuse 18 zu begünstigen, hat die Entgasungseinheit 5 im Bereich der Einströmöffnung 17 und der Entgasungsöffnung 20 eine Druckloszone 27, die von einem verringerten Kerndurchmesser des Schneckenabschnittes 19 gebildet ist. Nach der Entgasungsöffnung 20 geht dieser verringerte Kerndurchmesser wieder in den vollen Kerndurchmesser der Austragseinheit 6 über, um das Kunststoffmaterial wieder unter Druck und damit genügend plastifiziert zu halten.

Auch in dem in Fig. 2 gezeigten Ausführungsbeispiel sind die Einheiten 1 bis 7 hintereinander geschaltet und das Kunststoffmaterial bzw. die Schmelze durchläuft die Einheiten 1 bis 7 kontinuierlich in der vorgegebenen Reihenfolge. Zudem sind die einzelnen Einheiten räumlich unmittelbar und direkt aneinandergekoppelt und das Material gelangt von jeder einzelnen Einheit direkt und unmittelbar und ohne Zwischenschritte zur nächsten stromabwärts benachbarten Einheit. Die Einheiten 2 bis 6, das heißt, die Aufschmelzeinheit 2 bis zur Austragseinheit 6, liegen zudem auf einer gemeinsamen Längsachse bzw. deren Schnecken sind axial hintereinander angeordnet, wodurch die gesamte Vorrichtung sehr schmal und platzsparend wird.

Ohne vom Kern der Erfindung abzuweichen, sind verschiedene vorrichtungsmäßige Ausgestaltungen der Anordnung möglich. So ist in den entsprechenden Einheiten beispielsweise der Einsatz von Einfachschnecken, Doppelschnecken oder auch Mehrfachschnecken möglich. Außerdem können die einzelnen Verfahrenschritte unter Atmosphärenbedingungen oder mit Vakuumunterstützung ablaufen.

Für jede einzelne Einheit sind zahlreiche konstruktive Ausgestaltungen möglich, die der Fachmann dem Stand der Technik entnehmen kann. Die Temperaturen, die Verweilzeiten und die weiteren Parameter sind in erster Linie von dem zu bearbeiteten bzw. recyclierenden Material abhängig und können vom Fachmann angepasst werden. Die erfindungsgemäßen Vorteile können jedoch nur dann erreicht werden, wenn der Fachmann die Vorrichtung der vorliegenden Erfindung verwendet.

Die nachfolgenden Beispiele demonstrieren die vorteilhaften technischen Effekte der Vorrichtung:
Dabei wurden verschmutzte Kunststoffmaterialien, z.B. bedruckte oder mit Klebeetiketten versehen Folien, in parallelen Vergleichsversuchen behandelt und zwar einmal in einer aus dem Stand der Technik bekannten Anlage ohne Homogenisierung nach dem üblichen Verfahren und parallel dazu in der erfindungsgemäßen Anlage nach dem nicht unter die beanspruchte Erfindung fallenden Verfahren mit Homogenisierung, wobei die unmittelbar vergleichbaren Betriebsparameter, z.B. die Temperaturen, Durchsätze, Verweilzeiten, Drücke etc., im Schneidverdichter oder bei der Nachbearbeitung möglichst identisch gehalten wurden.

### 1. Beispiel: Verarbeitung von bedruckten Kunststofffolien

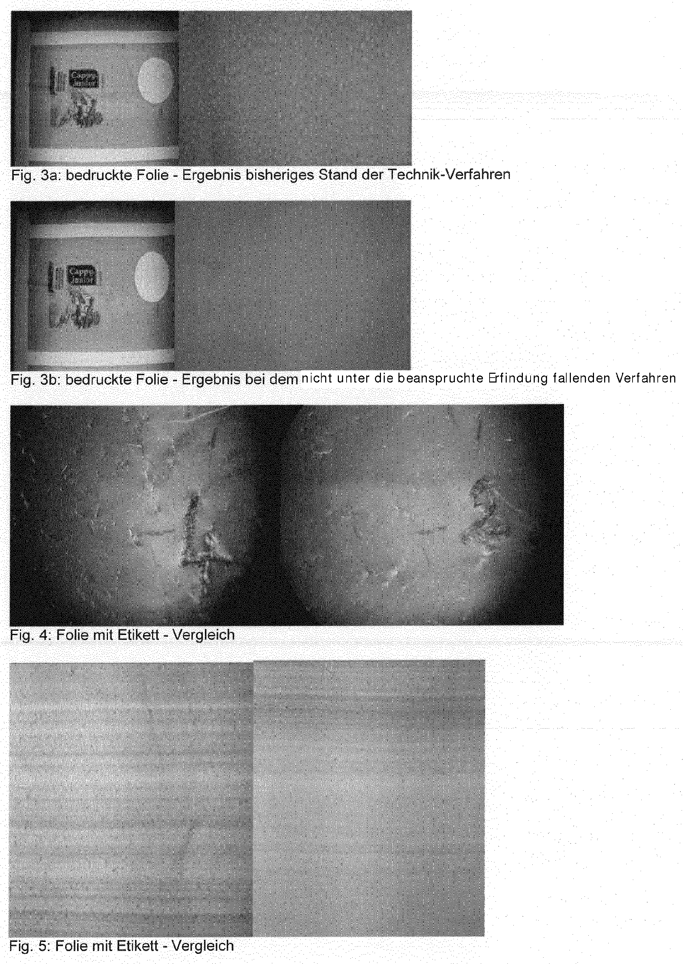

Die Abbildungen der Fig. 3a und 3b zeigen vergleichend die Ausgangsprodukte und die daraus erhaltenen Endprodukte. Im jeweils linken Bereich der Fig. 3a und 3b ist die zu behandelnde Eingangsfolie in Form einer farbig bedruckten Kunststofffolie dargestellt. Im jeweils rechten Bereich ist eine zu 100% aus dem nach der Behandlung erhaltenen Regenerat gefertigte Folie dargestellt.

Erkennbar ist, dass durch das bekannte Verfahren bzw. in der bekannten Vorrichtung keine vollständige Entgasung des Materials erfolgt und dass kleine Gasbläschen, hervorgerufen durch die zersetzten Druckerfarben, im Endprodukt verbleiben. Durch das nicht unter die beanspruchte Erfindung fallende Verfahren, insbesondere durch die Homogenisierung vor der Entgasung, wird das Entgasungsergebnis noch weiter verbessert und es sind kaum Gasbläschen zu erkennen..

### 2. und 3. Beispiel: Verarbeitung von LD-PE Film mit Papieretiketten

Die Abbildungen der Fig. 4 und 5 zeigen wiederum vergleichend im jeweils linken Bereich das Ergebnis nach dem bisherigen Verfahren und im rechten Bereich das Ergebnis nach dem nicht unter die beanspruchte Erfindung fallenden Verfahren. Ausgangsmaterialien waren jeweils transparente Verpackungsfilme aus LD-PE verunreinigt mit Papieretiketten. Der Verschmutzungsanteil lag bei etwa 1 % des Gesamtgewichts. Die Abbildungen 4 und 5 zeigen mikroskopische Aufnahmen von Filmen, hergestellt zu 100% aus dem nach der Bearbeitung erhaltenen recycelten Material. Die Filtrationsfeinheit beträgt in Fig. 4 110 µm, in Fig. 5 125 µm.

Erkennbar ist, dass im jeweils rechten Bereich (nicht unter die beanspruchte Erfindung fallendes Verfahren) die Verschmutzungen, insbesondere Papierpartikel, Klebstoffreste, aber auch Gasbläschen, weniger, kleiner und auch feiner verteilt sind als im linken Bereich (Stand der Technik). Die mechanischen und optischen Eigenschaften dieser Folien sind dadurch besser.

In allen Fällen reduziert sich der Anteil an Verschmutzungen im Endprodukt somit deutlich und die Qualität steigt.

## Patentansprüche

1. Anordnung zur Recyclierung von Kunststoffen umfassend:
a) zumindest eine Aufbereitungseinheit (1), insbesondere einen an sich bekannten Schneidverdichter bzw. Behälter mit umlaufenden Misch- und Zerkleinerungswerkzeugen, wobei das Material, falls erforderlich, zerkleinert und, in eine fluidartige Form gebracht wird und unter Erhaltung seiner Stückigkeit und Rieselfähigkeit, erwärmt und permanent gemischt, und gegebenenfalls entgast erweicht, getrocknet, in seiner Viskosität erhöht und/oder kristallisiert wird,
b) zumindest eine Aufschmelzeinheit (2) zum Aufschmelzen des aufbereiteten Materials, zumindest soweit, dass eine Filtration möglich ist, in Form eines Extruders mit einer in einem Gehäuse (10) drehbaren Schnecke mit einem ersten Schneckenabschnitt (11),
c) zumindest eine Filtrationseinheit (3) zur Filtration der Schmelze,
d) zumindest eine Homogenisierungseinheit (4) zur Homogenisierung der filtrierten Schmelze,
e) zumindest eine Entgasungseinheit (5) zur Entgasung der homogenisierten Schmelze sowie
f) zumindest eine Austragseinheit (6) zum Austrag und/oder zumindest eine Nachfolgebearbeitungseinheit (7) zur Bearbeitung der Schmelze,
- wobei die genannten Einheiten (1) bis (6) bzw. (7) in der angegebenen Reihenfolge jeweils nacheinander geschaltet und hintereinander bzw. aneinander gekoppelt sind und das Kunststoffmaterial bzw. die Schmelze diese Einheiten (1) bis (6) bzw. (7) in dieser Reihenfolge durchläuft,
**dadurch gekennzeichnet, dass**
- sich die Homogenisierungseinheit (4) im Inneren eines weiteren Gehäuses (18) befindet und wobei die Homogenisierungseinheit (4) ein stromaufwärts liegendes Maddock-Scherteil, und einen stromabwärts davon liegenden und koaxial zum Maddock-Scherteil ausgerichteten Homogenisator (40) in Form eines zylindrischen Drehkörpers umfasst, wobei auf der Außenfläche des Homogenisators (40) eine größere Anzahl von Erhebungen (41) angeordnet ist, und wobei der Homogenisator (40) im Gehäuse (18) drehbar ist und dadurch auf den ihn umströmenden Polymerfilm bzw. -schlauch eine scherende und mischende Wirkung ausübt.
- wobei im Gehäuse (18) stromabwärts des Homogenisators (40) ein zweiter Schneckenabschnitt (19) drehbar gelagert ist, der das plastifizierte Kunststoffmaterial in einen Entgasungsbereich bzw. eine Entgasungseinheit 5 fördert,
- wobei der erste Schneckenabschnitt (11), der zweite Schneckenabschnitt (19) und der Homogenisator (40) koaxial angeordnet sind.

2. Anordnung nach Anspruch 1, **dadurch gekennzeichnet, dass** die Einheiten (1) bis (6) bzw. (7) räumlich unmittelbar und direkt, ohne weitere dazwischengeschaltete Einheiten, nacheinander geschaltet und prozessual hintereinander gekoppelt sind.

3. Anordnung nach einem der Ansprüche 1 oder 2, **dadurch gekennzeichnet, dass** eine Steuerung zur Regulierung der jeweiligen Temperaturen des Materials bzw. der Schmelze in den Einheiten (1) bis (6) bzw. (7) vorgesehen ist.

4. Anordnung nach einem der Ansprüche 1 bis 3, **dadurch gekennzeichnet, dass** die Steuerung die Temperaturen so regelt, dass die Temperatur (T4) des Materials bzw. der Schmelze während, zumindest aber am Ende, der Homogenisierung in der Homogenisierungseinheit (4) und vor Beginn der Entgasung in der Entgasungseinheit (5) zumindest gleich hoch wie, vorzugsweise höher als, bei allen anderen Behandlungsschritten in den anderen Einheiten ist, insbesondere dass die Temperatur (T6) des Materials bzw. der Schmelze bei der Austragung in der Austragungseinheit (6) bzw. die Temperatur (T7) während der Nachfolgebearbeitung in der Nachfolgebearbeitungseinheit (7) geringer ist als, oder maximal gleich ist wie, die Temperatur (T4) während bzw. am Ende der Homogenisierung in der Homogenisierungseinheit (4).

5. Anordnung nach einem der Ansprüche 1 bis 4, **dadurch gekennzeichnet, dass** die Einheiten (2) bis (5), vorzugsweise (2) bis (6), insbesondere (2) bis (7), axial hintereinander angeordnet sind bzw. auf einer gemeinsamen Längsachse liegen.

6. Anordnung nach einem der Ansprüche 1 sowie 3 bis 5, **dadurch gekennzeichnet, dass** eine Einheit (8) zur Zugabe von zellbildenden Medien, z.B. Kohlendioxid, Stickstoff oder Wasser, in die Schmelze, vorgesehen ist, wobei die Einheit (8) die zellbildenden Medien während der Homogenisierung oder unmittelbar vor oder nach der Homogenisierung, jedoch nach der Filtration und vor der Entgasung, einbringt.

7. Anordnung nach einem der Ansprüche 1 bis 6, **dadurch gekennzeichnet, dass**, insbesondere in der Austragseinheit (6), eine Kühleinrichtung (9) für die aus der Entgasungseinheit (5) austretende Schmelze, beispielsweise ein Zylinder oder eine Schnecke, vorgesehen ist, die geeignet ist, die Schmelze nach der Entgasung und bei oder vor der Austragung bzw. Nachfolgebearbeitung, insbesondere um bis zu 20%, vorzugsweise um 5 bis 10%, abzukühlen.

## Claims

1. A device for recycling plastics, comprising:
a) at least one processing unit (1), in particular a cutting compactor or container of prior art with rotating mixing and comminution tools, wherein the material, if necessary, is comminuted and is converted to fluid form, heated whilst retaining its lumpiness and pourability, permanently mixed and, if necessary, degassed, softened, dried, increased in its viscosity and/or crystallised,
b) at least one melting unit (2 for melting the processed material, at least to the extent that a filtration is possible, in the form of an extruder with a screw rotatable in a housing (10), with a first screw section (11),
c) at least one filtration unit (3) for filtering the melt,
d) at least one homogenisation unit (4) for homogenising the filtered melt,
e) at least one degassing unit (5) for degassing the homogenised melt, and
f) at least one removal unit (6) for removing and/or at least one subsequent processing unit (7) for processing the melt,
- wherein the units (1) to (6) or (7) mentioned are each connected on after each other in the specified sequence, and are linked after or to one another and the plastic material or the melt passes through these units (1) to (6) or (7) in this sequence,
**characterised in that**
- the homogenisation unit (4) is installed in the interior of a further housing (18), and wherein the homogenisation unit (4) comprises an upstream Maddock shearing part and, downstream from it, a homogeniser (40), aligned coaxially to the Maddock shearing part, in the form of a cylindrical rotating body, wherein a larger number of elevations (40) is arranged on the outer surface of the homogeniser (40) and wherein the homogeniser (40) is rotatable in the housing (18) and therefore exerts a shearing and mixing action on the polymer film or hose flowing round it.
- wherein a second screw section (19) is pivotably mounted in the housing (18) downstream from the homogeniser (40), which section feeds the plasticised plastic material into a degassing region or degassing unit 5,
- wherein the first screw section (11), the second screw section (19) and the homogeniser (40) are arranged coaxially.

2. The device according to Claim 1, **characterised in that** the units (1) to (6) or (7) are connected one after another spatially, immediately and directly, without further inserted units, and are procedurally linked one after another.

3. The device according to any one of the preceding Claims 1 or 2, **characterised in that** a control system is provided for regulating the prevailing temperatures of the material or the melt in the units (1) to (6) or (7).

4. The device according to any one of Claims 1 to 3, **characterised in that** the control system regulates the temperatures so that the temperature (T4) of the material or the melt, during, but at least at the end of the homogenisation in the homogenisation unit (4), and before the beginning of the degassing in the degassing unit (5), is at least as high as, and preferably higher than the temperature in all the other treatment steps in the other units, and, in particular, **in that** the temperature (T6) of the material or melt, at the time of removal in the removal unit (6), or the temperature (T7) during the subsequent processing in the subsequent processing unit (7), is lower than, or at a maximum as high as the temperature (T4) during or at the end of the homogenisation in the homogenisation unit (4).

5. The device according to any one of Claims 1 to 4, **characterised in that** the units (2) to (5), preferably (2) to (6), and in particular (2) to (7), are arranged axially after one another or lie on a common longitudinal axis.

6. The device according to one of Claims 1 and 3 to 5, **characterised in that** a unit (8) is provided for feeding cell-forming media, e.g. carbon dioxide, nitrogen or water, into the melt, wherein the unit (8) introduces the cell-forming media during the homogenisation or directly before or after the homogenisation but after the filtration and before the degassing.

7. The device according to any one of Claims 1 to 6, **characterised in that**, in particular, a cooling device (9) is provided in the removal unit (6) for the melt escaping from the degassing unit (5), for example a cylinder or screw, which is suitable for cooling the melt after degassing and during or before the removal or subsequent processing, in particular by up to 20% and preferably by 5 to 10%.

## Revendications

1. Dispositif de recyclage des matières plastiques comprenant :
a) au moins une unité de traitement (1), en particulier un broyeur-compacteur connu en soi ou un récipient muni d'outils de malaxage et de broyage rotatifs, de manière à ce que la matière soit, si nécessaire, broyée et acheminée sous une forme fluide, chauffée et mélangée en permanence tout en conservant sa forme particulaire et ses propriétés d'écoulement et à être, le cas échéant, dégazée, ramollie, séchée, rendue plus visqueuse et/ou cristallisée,
b) au moins une unité de fusion (2) pour faire fondre la matière traitée au moins jusqu'à un point auquel une filtration est possible, sous la forme d'une extrudeuse munie d'une vis sans fin pouvant tourner dans un fourreau (10) munie d'un premier segment de vis sans fin (11),
c) au moins une unité de filtration (3) pour filtrer la masse fondue,
d) au moins une unité d'homogénéisation (4) pour homogénéiser la masse fondue filtrée,
e) au moins une unité de dégazage (5) pour dégazer la masse fondue homogénéisée ainsi que
f) au moins une unité de décharge (6) pour décharger la masse fondue et/ou au moins une unité de traitement ultérieur (7) pour traiter la masse fondue,
- lesdites unités (1) à (6) ou (7) mentionnées dans l'ordre indiqué étant respectivement connectées les unes après les autres et couplées les unes derrière les autres ou entre elles et la matière plastique ou la masse fondue traversant ces unités (1) à (6) ou (7) dans cet ordre,
**caractérisé en ce que**
- l'unité d'homogénéisation (4) se situe à l'intérieur d'un autre fourreau (18) et l'unité d'homogénéisation (6) comprenant une partie de cisaillement de type Maddock montée en amont et un homogénéisateur (40) sous forme de corps rotatif cylindrique monté en aval de celui-ci et orienté coaxialement par rapport à la partie de cisaillement de type Maddock, la surface extérieure de l'homogénéisateur (40) comportant un plus grand nombre de protubérances (41) et l'homogénéisateur (40) pouvant tourner dans le fourreau (18) et une action de cisaillement et de malaxage s'exerçant ainsi sur le film ou le tube polymère qui l'entoure,
- un second segment de vis sans fin (19) étant monté de manière à pouvoir tourner dans le fourreau (18) en aval de l'homogénéisateur (40), ledit second segment acheminant la matière plastique plastifiée dans une zone de dégazage ou une unité de dégazage (5),
- le premier segment de vis sans fin (11), le second segment de vis sans fin (19) et l'homogénéisateur (40) étant agencés de manière coaxiale.

2. Dispositif selon la revendication 1, **caractérisé en ce que** les unités (1) à (6) ou (7) sont connectées les unes après les autres de manière contiguë et directe, sans autre unité connectée entre elles, et couplées les unes derrière les autres selon la procédure.

3. Dispositif selon l'une des revendications 1 ou 2, **caractérisé en ce qu'**un moyen de commande est prévu pour réguler les températures respectives de la matière ou de la masse fondue dans les unités (1) à (6) ou (7).

4. Dispositif selon l'une des revendications 1 à 3, **caractérisé en ce que** le moyen de commande régule les températures de manière à ce que la température (T4) de la matière ou de la masse fondue au cours de, mais au moins à la fin de, l'homogénéisation dans l'unité d'homogénéisation (4) et avant le début du dégazage dans l'unité de dégazage (5), est au moins aussi élevée que, ou de préférence plus élevée que, dans toutes les autres étapes de traitement dans les autres unités, en particulier **en ce que** la température (T6) de la matière ou de la masse fondue au cours de la décharge dans l'unité de décharge (6) ou la température (T7) durant le traitement ultérieur dans l'unité de traitement ultérieur (7) est inférieure à, ou est au maximum égale à, la température (T4) pendant ou à la fin de l'homogénéisation dans l'unité d'homogénéisation (4).

5. Dispositif selon l'une des revendications 1 à 4, **caractérisé en ce que** les unités (2) à (5), de préférence (2) à (6), en particulier (2) à (7), sont agencées axialement les unes derrière les autres ou montées sur un axe longitudinal commun.

6. Dispositif selon l'une des revendications 1 et 3 à 5, **caractérisé en ce qu'**une unité (8) est prévue pour ajouter des milieux de nucléation comme du dioxyde de carbone, de l'azote ou de l'eau dans la masse fondue, l'unité (8) ajoutant les milieux de nucléation durant l'homogénéisation ou immédiatement avant ou après l'homogénéisation mais après la filtration ou avant le dégazage.

7. Dispositif selon l'une des revendications 1 à 6, **caractérisé en ce que**, en particulier dans l'unité de décharge (6), un dispositif de refroidissement (9) est prévu pour la masse fondue sortant de l'unité de dégazage (5), par exemple un cylindre ou une vis sans fin, qui est approprié pour refroidir la masse fondue après le dégazage et pendant ou avant toute décharge ou tout traitement ultérieur, en particulier dans une proportion allant jusqu'à 20 %, de préférence de 5 à 10 %.
